# FASCICULE DE BREVET EUROPEEN

(11) **EP 2 652 670 B1**
(45) Date de publication et mention de la délivrance du brevet: **15.08.2018**
(21) Numéro de dépôt: 11794124.5
(22) Date de dépôt: 07.12.2011
(51) Int. Cl.: G06K 7/00, G06K 19/07, G07F 7/10

(54) **PROCÉDÉ DE GESTION DU DIALOGUE ENTRE UN ÉQUIPEMENT ET AU MOINS UN OBJET MULTI-APPLICATIF TEL QU'UNE CARTE À PUCE SANS CONTACT ET OBJET CORRESPONDANT**
VERFAHREN ZUR VERWALTUNG DES DIALOGS ZWISCHEN EINEM GERÄTETEIL UND MINDESTENS EINEM MEHRZWECKOBJEKT WIE EINER KONTAKTLOSEN CHIPKARTE SOWIE ENTSPRECHENDES OBJEKT
METHOD OF MANAGING THE DIALOGUE BETWEEN AN ITEM OF EQUIPMENT AND AT LEAST ONE MULTI-APPLICATION OBJECT SUCH AS A CONTACTLESS CHIP CARD AND CORRESPONDING OBJECT

(30) Priorité: 13.12.2010 FR 1060424
(43) Date de publication de la demande: 23.10.2013
(73) Titulaire: STMicroelectronics (Rousset) SAS, 13790 Rousset (FR)
(72) Inventeur: ROMAIN, Fabrice, 83560 Rians (FR); CATALDO, Christophe, 13540 Puyricard (FR); MANI, Christophe, 84300 Cavaillon (FR); GABRIELE, Sophie, 13120 Gardanne (FR)
(74) Mandataire: Zapalowicz, Francis
(86) Numéro de dépôt international: PCT/EP2011/072002
(87) Numéro de publication internationale: WO 2012/080048

(56) Documents cités:
- EP-A1- 1 939 822
- US-A1- 2006 022 042
- US-A1- 2008 129 450

## Description

L'invention concerne la communication sans contact entre un objet portatif multi-applicatif, par exemple une carte à puce sans contact, et un équipement, par exemple un lecteur de carte.

Généralement, un objet portatif capable de dialoguer selon un protocole de communication sans contact avec un lecteur, est associé à une seule application, par exemple une application bancaire, ou bien une application de transport ...

Afin d'être identifiés par le lecteur, les moyens de traitement de l'objet portatif transmettent un numéro de série qui s'apparente à un identifiant de cet objet.

Il existe également des cartes sans contact multi-applications. En d'autres termes, la carte contient différents modules applicatifs respectivement dédiés à des applications différentes, par exemple une application bancaire, une application de transport ...

Actuellement, les solutions existantes pour reconnaître et identifier toutes les applications possibles stockées dans une seule carte utilisent des échanges de commandes complexes, principalement des commandes propriétaires ou bien nécessitant un développement spécifique du logiciel (OS : Operating System) incorporé dans les moyens de traitement de la carte. La demande de brevet américaine US2008/0129450 A1 décrit un appareil pour sélectionner une application virtuelle présente sur une carte sans-contact multi-applications. Selon un mode de mise en oeuvre, il est proposé un nouveau procédé de gestion du dialogue entre un équipement et au moins un objet multi-applicatif, capable d'identifier et de sélectionner les applications dans ledit objet.

Il est également proposé, selon un mode de mise en oeuvre, d'apporter une réponse à de nombreuses situations complexes en utilisant un échange de communication normalisé s'affranchissant d'instructions de commandes propriétaires.

Selon un aspect, il est proposé un procédé de gestion du dialogue entre un équipement et au moins un objet capables de dialoguer selon un protocole de communication sans contact contenant une procédure d'anticollision, selon la revendication 1. Ainsi, il est prévu en particulier de simuler la présence de plusieurs cartes mono-applicatives à partir de ladite carte multi-applicative, de façon à forcer l'équipement à déclencher une procédure d'anticollision qui va lui permettre de lister les différentes applications, comme s'il s'agissait d'identifiants associés à différentes cartes.

Selon un mode de mise en oeuvre, les modules applicatifs sont respectivement associés à plusieurs informations d'identification différentes, et la détection des modules applicatifs comprend un déclenchement de ladite procédure d'anticollision sur lesdites informations d'identification.

Une information d'identification peut comprendre par exemple comme dans le protocole type B de la norme ISO/IEC 14443, un identifiant contenu dans un champ (dénommé PUPI dans ladite norme) d'un signal de réponse à demande (désigné par ATQB dans ladite norme), ou bien comme dans le protocole type A de la norme ISO/IEC 14443, un identifiant (désigné sous le vocable UID dans ladite norme) et un signal de réponse à demande (désigné par ATQA dans ladite norme) dédiés, ou bien comme dans la norme ISO 18000-6, un pointeur (« handle ») tiré aléatoirement permettant uniquement de désigner le module.

Ainsi la procédure d'anticollision pourra être déclenchée selon les cas, sur le contenu de l'identifiant et donc sur le signal de réponse dédié au module (protocole type B), sur le contenu du signal de réponse à demande et sur le contenu de l'identifiant (protocole type A), ou sur la valeur du pointeur.

Un tel procédé de gestion peut s'appliquer à tout protocole de communication sans contact contenant une procédure d'anticollision. A cet égard, on peut citer à titre d'exemple non limitatif, la norme ISO 15693, ISO 18000-2 à 18000-7, la norme ISO 18092, ou encore la procédure d'anticollision décrite dans le brevet européen n° 0 944 016. Cela étant, ce procédé de gestion peut s'appliquer tout particulièrement à au moins un objet capable de dialoguer avec ledit équipement selon le protocole type A ou le protocole type B définis dans la norme ISO/IEC 14443.

Selon un mode de mise en oeuvre, applicable au protocole type A de la norme ISO/IEC 14443, la transmission d'un bit ayant une première valeur logique, par exemple la valeur logique 1, comprend une modulation d'une porteuse avec une sous-porteuse pendant une première moitié d'une durée prédéterminée (appelée également « temps bit ») à partir d'une première séquence de commande, tandis que la transmission d'un bit ayant une deuxième valeur logique, par exemple la valeur logique 0, comprend une modulation de la porteuse avec la sous-porteuse pendant la deuxième moitié de ladite durée prédéterminée à partir d'une deuxième séquence de commande ; et, la transmission de ladite information représentative d'une collision comprend une modulation de ladite porteuse avec la sous-porteuse pendant toute la durée prédéterminée à partir d'une troisième séquence de commande.

Selon un mode de mise en oeuvre, l'élaboration dudit au moins un signal de réponse comprend : à partir de plusieurs signaux de réponse élémentaires respectivement associés au module applicatif, au moins deux bits de même rang dans les différents signaux de réponse élémentaires ayant des valeurs logiques différentes,
- une comparaison des bits de même rang dans les différents signaux de réponse élémentaires, et,
- en cas de concordance entre tous les bits de même rang, une élaboration, pour le rang considéré, de la première séquence de commande ou de la deuxième séquence de commande en fonction de la valeur logique du bit considéré, et,
- en cas de discordance entre au moins deux bits de même rang, une élaboration pour le rang considéré, de ladite troisième séquence de commande, et
- une modulation de la porteuse avec la sous-porteuse, à partir desdites séquences de commande élaborées.

Selon un mode de mise en oeuvre, ledit au moins un signal de commande appartient au groupe formé par un signal de commande de demande désigné par REQA dans la norme ISO/IEC 14443, un signal de commande de réveil désigné par WUPA dans la norme ISO/IEC 14443, un signal de commande d'anticollision désigné par ANTICOLLISION dans la norme ISO/IEC 14443 et les signaux de réponse élémentaires correspondant à ces signaux de commande appartiennent au groupe formé par un signal de réponse à demande désigné par ATQA dans la norme ISO/IEC 14443 et un signal de réponse contenant au moins une partie de l'identifiant d'un module applicatif désigné par UID CLn dans la norme ISO/IEC 14443.

Selon un mode de mise en oeuvre applicable lorsque l'objet est capable de dialoguer avec ledit équipement selon le protocole type B défini dans la norme ISO/IEC 14443, la transmission des octets de données est effectuée sous forme de caractères eux-mêmes transmis sous forme de trames, et la transmission de ladite information de collision comprend une élaboration d'une trame invalide et la transmission de ladite trame invalide.

A titre d'exemple non limitatif, une trame invalide peut être une trame comportant un code de détection d'erreur de vérification de redondance cyclique (« CRC » selon un acronyme anglosaxon bien connu de l'homme du métier) incorrect.

Selon un mode de mise en oeuvre, les informations d'identification respectivess des modules applicatifs comprennent des identifiants respectivement associés à des numéros de tranches temporelles différents, et lors de la procédure d'anticollision, chaque identifiant est transmis dans la tranche temporelle dont le numéro de tranche est associé audit identifiant.

Selon un mode de mise en oeuvre, ledit au moins un signal de commande appartient au groupe formé par un signal de commande de demande désigné par REQB dans la norme ISO/IEC 14443, un signal de commande de réveil désigné par WUPB dans la norme ISO/IEC 14443, une commande de marqueur de tranche désigné par « Slot-MARKER » dans la norme ISO/IEC 14443, et les signaux de réponse élémentaires correspondant à ces signaux de commande comprennent un signal de réponse à demande désigné par ATQB dans la norme ISO/IEC 14443.

Selon un autre aspect, il est proposé un objet comprenant des moyens de traitement configurés pour dialoguer avec un équipement selon un protocole de communication sans contact contenant une procédure d'anticollision selon la revendication 11. Pour provoquer ledit déclenchement de la procédure d'anticollision, les moyens de déclenchement sont par exemple configurés pour transmettre un signal contenant une information représentative d'une collision.

Selon un mode de réalisation, les modules applicatifs sont respectivement associés à plusieurs informations d'identification différentes, et les moyens de déclenchement sont configurés pour provoquer un déclenchement de ladite procédure d'anticollision sur lesdites informations d'identification.

Selon une variante, les moyens de traitement sont configurés pour dialoguer avec ledit équipement selon le protocole type A défini dans la norme ISO/IEC 14443.

Selon un mode de réalisation applicable à cette variante, les moyens de traitement comprennent des moyens de modulation configurés pour moduler une sous-porteuse à partir d'une séquence de commande, des premiers moyens d'activation configurés pour élaborer une première séquence de commande et activer les moyens de modulation pour moduler la porteuse pendant une première moitié d'une durée prédéterminée de façon à transmettre un bit ayant une première valeur logique, des deuxièmes moyens d'activation configurés pour élaborer une deuxième séquence de commande et activer les moyens de modulation pour moduler la porteuse pendant une deuxième moitié de ladite durée prédéterminée de façon à transmettre un bit ayant une deuxième valeur logique, et les moyens de déclenchement comprennent des troisièmes moyens d'activation configurés pour élaborer une troisième séquence de commande et activer les moyens de modulation pour moduler la porteuse pendant toute ladite durée prédéterminée de façon à transmettre ladite information représentative d'une collision.

Selon un mode de réalisation également applicable à ladite variante, les moyens de déclenchement comprennent des moyens de détermination configurés pour déterminer ledit au moins un signal de réponse à partir de plusieurs signaux de réponse élémentaires respectivement associés aux modules applicatifs, au moins deux bits de même rang dans les différents signaux de réponse élémentaires ayant des valeurs logiques différentes, les moyens de détermination comportant des moyens de comparaison configurés pour effectuer une comparaison des bits de même rang dans les différents signaux de réponse élémentaires, et les moyens de détermination sont configurés pour, en cas de concordance entre tous les bits de même rang, élaborer pour le rang considéré la première séquence de commande ou de la deuxième séquence de commande, et en cas de discordance entre au moins deux bits de même rang, élaborer pour le rang considéré ladite troisième séquence de commande, et les moyens de modulation sont configurés pour moduler la porteuse avec la sous porteuse à partir desdites séquences de commande élaborées.

Selon une autre variante, les moyens de traitement sont configurés pour dialoguer avec ledit équipement selon le protocole type B défini dans la norme ISO/IEC 14443.

Selon un mode de réalisation applicable à cette autre variante, les moyens de traitement comprennent des moyens de transmission configurés pour transmettre des octets de données sous forme de caractères eux-mêmes transmis sous forme de trames, et les moyens de déclenchement comprennent des moyens d'élaboration configurés pour élaborer une trame invalide et la délivrer aux moyens de transmission.

Selon un mode de réalisation également applicable à cette autre variante, les informations d'identification respectives des modules applicatifs comprennent des identifiants respectivement associés à des numéros de tranches temporelles différents, et lors de la procédure d'anticollision les moyens de traitement sont configurés pour transmettre chaque identifiant dans la tranche temporelle dont le numéro de tranche est associé audit identifiant.

Quelle que soit la variante les moyens configurés pour élaborer un signal de réponse destiné à provoquer le déclenchement d'une procédure d'anticollision, peuvent être réalisés en tout ou partie par des moyens logiciels et/ou des circuits logiques.

D'autres avantages et caractéristiques de l'invention apparaîtront à l'examen de la description détaillée de modes de mise en oeuvre et de réalisation, nullement limitatifs, et des dessins annexés sur lesquels :
- la figure 1 illustre schématiquement un mode de réalisation d'un objet portatif selon l'invention,
- les figures 2 et 3 illustrent schématiquement un mode de mise en oeuvre d'un procédé selon l'invention,
- les figures 4 à 8 illustrent plus en détails mais toujours schématiquement un mode de mise en oeuvre du procédé selon l'invention applicable à un protocole de type A défini dans la norme ISO/IEC 14443, et,
- les figures 9 à 15 illustrent plus en détails mais toujours schématiquement un mode de mise en oeuvre et de réalisation de l'invention applicable au protocole de type B défini dans la norme ISO/IEC 14443.

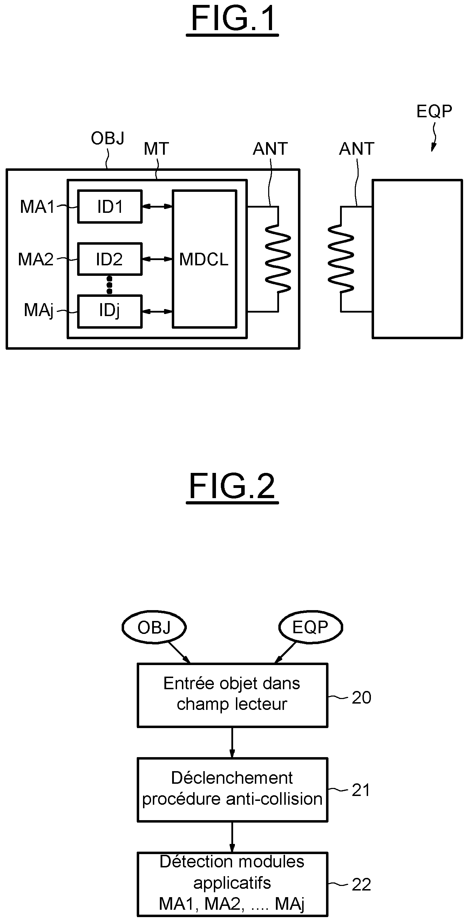

Sur la figure 1, la référence OBJ désigne un objet portatif, par exemple une carte à puce sans contact, ou tout dispositif intégrant une fonction radiofréquence sans contact, ou encore un appareil contenant une telle carte à puce comme par exemple un téléphone mobile,ou bien contenant un tel dispositif.

L'objet OBJ comporte des moyens de traitement MT, par exemple un microprocesseur, connecté à une antenne ANT susceptible d'être en couplage inductif avec l'antenne ANT d'un équipement EQP, par exemple un lecteur, pour la transmission des informations entre l'objet et l'équipement. Dans l'exemple décrit ici, l'objet OBJ est un objet multi-applicatif. En d'autres termes, les moyens de traitement comportent ici plusieurs modules applicatifs MA1, MA2...MAj, respectivement associés à des informations d'identification différentes ID1, ID2, ...IDj.

Ces modules applicatifs peuvent être des modules logiciels dédiés à des applications particulières et différentes, par exemple une application bancaire, une application de transport, une application de contrôle d'accès, ...

L'objet OBJ est capable de dialoguer avec l'équipement EQP selon un protocole de communication sans contact contenant une procédure d'anticollision. Et, comme on va le voir plus en détail ci après, la détection des différents modules applicatifs s'effectue par un déclenchement de la procédure d'anticollision entre l'objet et l'équipement, avantageusement sur les informations d'identification IDj.

Aussi, est-il prévu que les moyens de traitement MT comprennent des moyens de déclenchement MDCL configurés pour provoquer un déclenchement de ladite procédure d'anticollision entre l'objet OBJ et l'équipement EQP.

D'une façon générale, comme illustré sur la figure 2, lorsque l'objet OBL entre (étape 20) dans le champ du lecteur EQP, celui-ci va déclencher la procédure d'anticollision (étape 21) de façon à pouvoir détecter les différents modules applicatifs MA1, MA2, MAj, et plus précisément dans certains cas les identifiants de ces modules contenus dans les informations d'identification ID1, ID2, IDj (étape 22).

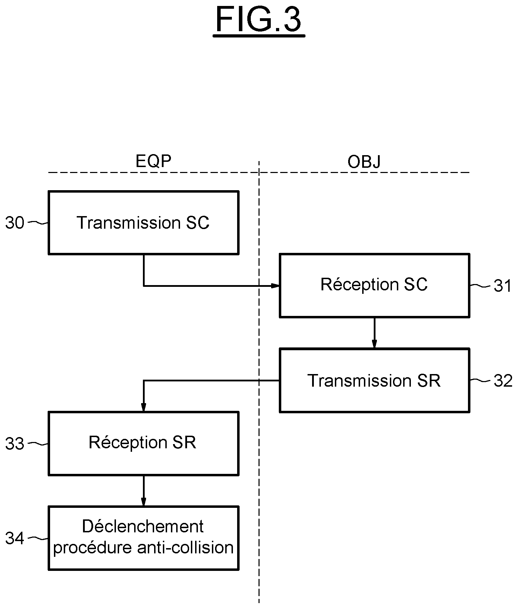

Plus précisément, la détection des modules applicatifs comprend par exemple, comme illustré sur la figure 3, une transmission par l'équipement EQP (étape 30) d'un signal de commande SC, qui peut être par exemple un signal REQA ou REQB dans le cas d'une application à la norme ISO/IEC 14443. L'objet OBJ reçoit alors (étape 31) ce signal de commande SC et élabore et transmet (étape 32) un signal de réponse SR contenant une information représentative d'une collision.

Comme on le verra plus en détail ci après, cette information représentative d'une collision peut être différente selon par exemple le protocole utilisé dans la norme ISO/IEC 14443.

A la réception 33 de ce signal SR, l'équipement EQP déclenche (étape 34) la procédure d'anticollision.

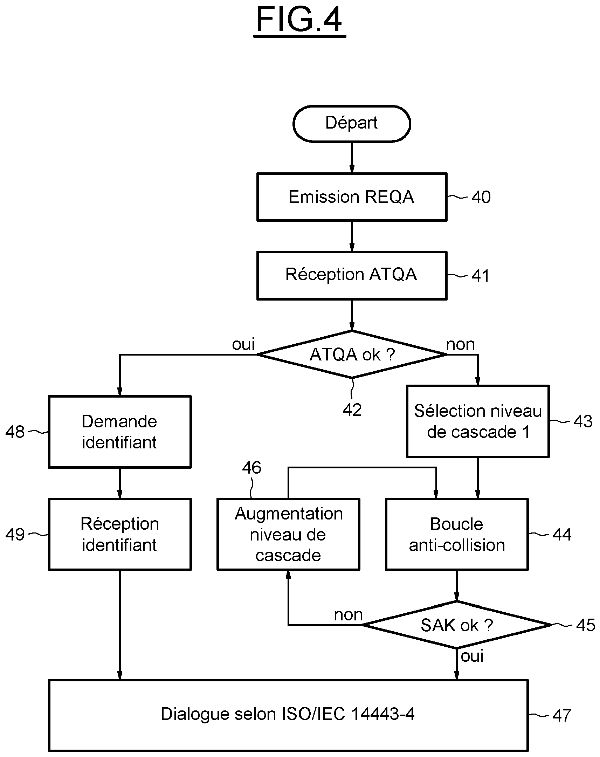

Bien que l'invention s'applique à tout protocole de communication sans fil ayant une procédure d'anticollision, on va maintenant décrire plus en détails en se référant plus particulièrement aux figures 4 à 14, une gestion du dialogue entre l'équipement EQP et l'objet OBJ dans le cas d'un dialogue selon un protocole de communication sans contact défini dans la norme ISO/IEC 14443.

L'homme du métier pourra à cet égard se référer à ladite norme, et plus particulièrement aux parties 2 et 3 de cette norme, respectivement contenues dans les documents ISO/CEI 14443-3 :2001 et ISO/CEI 14443-2 :2010. Ces deux documents sont à toutes fins utiles incorporés au contenu de la présente demande de brevet.

Généralement, le dialogue entre l'équipement EQP et l'objet OBJ selon la norme ISO/IEC 14443 s'effectue de la façon suivante :
- activation de l'objet OBJ par le champ électromagnétique radiofréquence produit par l'équipement EQP,
- l'objet OBJ attend silencieusement la réception d'une commande provenant de l'équipement EQP,
- transmission d'une commande par l'équipement EQP,
- transmission d'une réponse par l'objet OBJ.

L'équipement produit un champ électromagnétique radiofréquence alternatif qui permet d'alimenter l'objet OBJ, et qui est modulé pour l'échange d'informations entre l'objet et l'équipement. La fréquence du champ radiofréquence est égale à 13,56 MHz.

L'équipement EQP module l'amplitude du champ électromagnétique alternatif avec des impulsions de modulation de façon à transmettre les données vers l'objet OBJ.

L'objet OBJ quant à lui, charge le champ électromagnétique alternatif avec une sous-porteuse modulée (modulation de charge) de façon à transmettre les données vers l'équipement EQP.

On reviendra plus en détail ci après sur la transmission des bits en fonction de leur valeur logique.

On va maintenant décrire plus en détails en se référant plus particulièrement aux figures 4 à 8, un mode de mise en oeuvre et de réalisation applicable au protocole type A de la norme ISO/IEC 14443.

Pour détecter les objets qui se trouvent dans le champ électromagnétique de fonctionnement du lecteur, ce dernier envoie de façon répétitive des signaux de commande de demande désignés par REQA dans la norme ISO/IEC 14443. En réponse à un tel signal de commande de demande, il est prévu que l'objet renvoie un signal de réponse à demande désigné par ATQA dans la norme ISO/IEC 14443.

On rappelle ici que dans le protocole type A de la norme ISO 14443, l'objet peut prendre des états différents.

Plus précisément, dans un état hors tension, l'objet n'est pas alimenté du fait de manque d'énergie de porteuse.

Dans l'état REPOS, l'objet est alimenté. Il écoute les commandes et doit reconnaître les signaux REQA et WUPA. WUPA est un signal de commande de réveil.

L'objet pourra passer dans son état PRET dès qu'il aura reçu une commande REQA ou WUPA, et transmis un signal de réponse ATQA.

Dans l'état PRET, il est possible d'appliquer la procédure d'anticollision de trame binaire définie dans la norme ISO 14443. Lorsqu'une carte est sélectionnée avec son identifiant complet, la carte passe alors dans un état ACTIF dans lequel elle écoute tout message de couche supérieure.

La carte peut alors passer dans un état ARRET lorsqu'elle reçoit une commande spécifique. Dans cet état ARRET, la carte ne répond qu'à une commande WUPA.

On va maintenant se référer plus particulièrement à la figure 4 pour décrire la détection et l'identification des différents identifiants des modules applicatifs de l'objet OBJ.

Lorsque le protocole type A est utilisé, à chaque module applicatif sont dédiés un signal de réponse ATQA et un identifiant désigné sous le vocable UID. En d'autres termes l'information d'identification IDj d'un module MAj comprend le signal de réponse ATQAj et l'identifiant UIDj dédiés à ce module.

On suppose tout d'abord que l'objet OBJ est dans son état repos, et l'équipement EQP émet par exemple le signal de commande de demande REQA (étape 40).

Comme on le verra plus en détail ci après, les moyens de déclenchement de l'objet OBJ vont transmettre un signal de réponse ATQA (étape 41) contenant une information de collision destinée à provoquer le déclenchement de la procédure d'anticollision.

On reviendra plus en détail ci après sur l'élaboration d'un tel signal ATQA.

Dans l'étape 42, on vérifie le contenu du signal ATQA. Puisque celui-ci contient une information de collision, l'équipement EQP interprète ceci comme une collision provenant de la présence de plusieurs cartes dans le champ de l'équipement. En conséquence, l'équipement EQP déclenche une procédure d'anticollision lui permettant de détecter et d'identifier un identifiant associé à un module applicatif (que le lecteur va considérer comme étant un objet proprement dit) de façon à sélectionner ce module applicatif. Cette procédure d'anticollision comporte la sélection du niveau de cascade n°1 (selon ce protocole, chaque identifiant désigné sous le vocable UID peut se composer d'une, de deux ou de trois parties correspondant à un, deux ou trois niveaux de cascade, chaque partie étant référencée UID CLn, où n désigne le niveau de cascade).

Puis, la boucle d'anticollision est mise en oeuvre (étape 44). A l'issue de cette boucle d'anticollision, on vérifie si l'identifiant sélectionné par la boucle est complet ou non, à l'aide d'un signal SAK (étape 45). Ce signal SAK comporte un bit de cascade. Si le bit de cascade est à « 1 » par exemple, cela signifie que l'identifiant obtenu n'est pas complet. Dans ce cas, on remet en oeuvre la boucle d'anticollision en augmentant le niveau de cascade (étape 46). Si le bit de cascade du signal SAK est égal à « 0 », cela signifie alors que l'identifiant sélectionné est bien complet. Dans ce cas, le module applicatif est considéré comme étant dans son état ACTIF (étape 47) et est prêt à recevoir des commandes de niveau supérieur.

On recommence ensuite les étapes 40 à 47, de façon à identifier et sélectionner les autres identifiants des autres modules applicatifs qui ne sont toujours pas passés dans leur état ACTIF.

Lorsque l'avant dernier identifiant de l'avant dernier module applicatif a été identifié, le dernier module applicatif en réponse au signal REQA envoie un signal ATQA qui cette fois-ci ne comporte pas d'information de collision. Dans ce cas, après l'étape 42, l'équipement EQP envoie une demande d'identifiant (étape 48) en réponse à laquelle le module applicatif renvoie son identifiant complet. Après réception de cet identifiant complet (étape 49) tous les modules applicatifs sont dans leur état ACTIF (étape 47).

Si on suppose maintenant à titre d'exemple que le lecteur EQP est un lecteur d'application bancaire, et que l'objet OBJ comporte deux module applicatifs dont le premier MA1 associé à l'information d'identification ID1 est un module dédié à une application de transport, tandis que le module applicatif MA2 est un module dédié à une application bancaire, le lecteur va par exemple sélectionner d'abord le module MA1 associé à l'information d'identification ID1 en envoyant à l'objet OBJ un signal contenant l'identifiant UID1 associé à une commande spécifique du type bancaire. Le module MA1 étant un module dédié à une application de transport, ne va pas reconnaître la commande spécifique envoyée et transmettre un message d'erreur. Dans ce cas, le lecteur va sélectionner le deuxième module applicatif et lui transmettre un signal contenant son identifiant UID2 associé à ladite commande bancaire spécifique. Cette fois-ci, la commande sera reconnue par le module applicatif MA2 et le dialogue va pouvoir s'engager.

Cela étant il est également possible, si l'identifiant UIDj d'un module applicatif comporte une indication relative à ladite application, que le lecteur reconnaisse directement le type d'application du module à partir de son identifiant et le sélectionne directement en lui envoyant la commande appropriée.

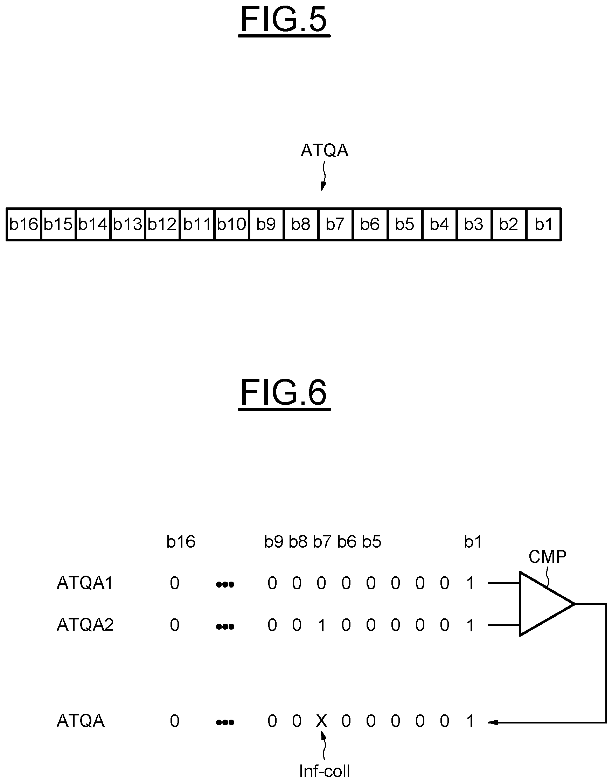

On se réfère maintenant plus particulièrement aux figures 5 et 6 pour illustrer l'élaboration d'un signal de réponse, par exemple du type ATQA, contenant une information de collision qui va provoquer le déclenchement par le lecteur EQP de la procédure d'anticollision.

Un signal ATQA est un signal comportant seize bits b1-b16. Les bits b1 à b5 sont des bits désignant une anticollision de type de trame binaire, telle que définie dans la norme ISO 14443. L'un des cinq bits bl-b5 doit être mis à « 1 » pour indiquer l'anticollision de trame binaire.

Les bits b6 et b13 à b16 sont des bits mis à zéro qui sont réservés pour un usage ultérieur de la norme.

Les bits b9 à b12 sont des bits de codage privatif tandis que les bits b7 et b8 indiquent la taille de l'identifiant UID.

Ainsi, si les deux bits b7 et b8 ont la valeur logique « 0 », cela signifie que l'identifiant UID est de taille simple avec un seul niveau de cascade.

Si le bit b7 est égal à « 1 » et que le bit b8 est égal à « 0 », la taille de l'identifiant UID est alors double avec deux niveaux de cascade tandis que si le bit b7 est égal à « 0 » et que le bit b8 est égal à « 1 », la taille de l'identifiant UID est alors triple avec trois niveaux de cascade.

On suppose maintenant, en se référant plus particulièrement à la figure 6, que l'objet OBJ comporte deux modules applicatifs, l'identifiant UID du module applicatif MA1 ayant une taille simple tandis que l'identifiant UID du module applicatif MA2 a une taille double.

Les moyens de déclenchement de l'objet comportent alors des moyens de détermination destinés à élaborer le signal de réponse ATQA à partir des signaux de réponse ATQA1 et ATQA2 dédiés aux deux modules applicatifs MA1 et MA2. Puisque l'identifiant UID du module MA1 a une taille simple, les bits b7 et b8 du signal ATQA1 sont égaux à « 0 ». Par contre, puisque l'identifiant UID du module MA2 a une taille double, les bits b7 et b8 du signal ATQA2 sont respectivement égaux à « 1 » et « 0 ».

On suppose également dans cet exemple que le bit b1 de chaque signal ATQA1 et ATQA2 est égal à «1 ».

D'une façon générale, pour qu'il y ait formation d'une information de collision, il convient qu'au moins deux bits de même rang dans les différents signaux de réponse élémentaire, en l'espèce les signaux ATQA1 et ATQA2, aient des valeurs logiques différentes.

C'est le cas ici pour le bit b7.

Bien entendu, si les deux identifiants UID des deux modules applicatifs avaient la même taille, ce qui conduirait à des bits b7 et b8 de même valeur logique dans les deux signaux ATQA1 et ATQA2, il conviendrait alors de différencier ces deux signaux par l'un au moins des bits b1 à b5 par exemple.

Il est alors prévu que les moyens de détermination comprennent des moyens de comparaison CMP qui va comparer les signaux ATQA1 et ATQA2 bit à bit, de façon à élaborer le signal de réponse ATQA qui va être transmis à l'équipement EQP.

A l'issue de cette comparaison, si tous les bits de même rang dans les signaux élémentaires ATQ1, ATQ2, ont la même valeur logique, alors le bit de rang correspondant dans le signal ATQA aura également la même valeur logique. Par contre, si au moins deux bits de même rang ont des valeurs logiques différentes, ce qui est le cas dans l'exemple décrit ici pour les bits b7, alors le bit de rang correspondant dans le signal ATQA sera remplacé par une information de collision Inf-coll.

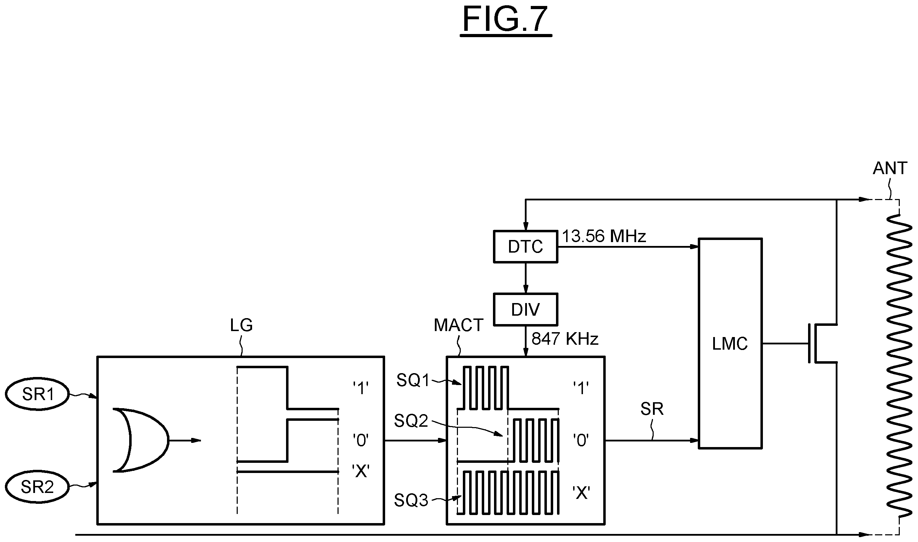

Pour donner plus de détails concernant cette information de collision dans le cas du protocole type A de la norme ISO 14443, on se réfère maintenant plus particulièrement à la figure 7.

La transmission d'un bit ayant une première valeur logique, par exemple la valeur logique « 1 », comprend une modulation de la porteuse avec une sous-porteuse de fréquence 847 kHz, pendant une première moitié d'une durée prédéterminée appelée « temps bit », à partir d'une première séquence de commande SQ1.

La transmission d'un bit ayant une deuxième valeur logique, par exemple la valeur « 0 », comprend une modulation de la porteuse avec la sous-porteuse pendant la deuxième moitié de la durée prédéterminée, à partir d'une deuxième séquence de commande SQ2.

Et, une transmission de l'information Inf-coll représentative d'une collision, comprend une modulation de la porteuse avec la sous-porteuse pendant toute la durée prédéterminée à partir d'une troisième séquence de commande SQ3.

En pratique, une logique LG (remplissant la fonction des moyens de comparaison CMP de la figure 6) comportant des portes logiques, par exemple du type « OU » (OR), reçoit successivement les bits de même rang des signaux de réponse élémentaires SR1 et SR2 (par exemple les signaux ATQA1 et ATQA2) et délivre en sortie une succession de commandes à des moyens d'activation MACT. Ces moyens d'activation MACT reçoivent par ailleurs un signal de cadencement à 847 kHz (fréquence de la sous-porteuse) délivré par un diviseur par huit DIV recevant en entrée le signal de cadencement de porteuse à la fréquence 13,56 mHz, ce signal de cadencement ayant été récupéré de l'antenne ANT par un détecteur DTC de structure également classique.

A partir du signal de cadencement à 847 kHz et de la sortie de la logique LG, les moyens MACT élaborent une succession de séquences comportant des séquences SQ1, SQ2 et au moins une séquence SQ3 de façon à former le signal de réponse qui va être transmis à l'équipement EQP de façon à provoquer le déclenchement de la procédure anticollision. Le signal SR est transmis à des moyens de contrôle de modulation LMC, de structure classique, qui commandent la grille d'un transistor connectée à l'antenne ANT.

Les moyens de contrôle de modulation LMC reçoivent par ailleurs le signal de cadencement de porteuse à la fréquence 13,56 mHz.

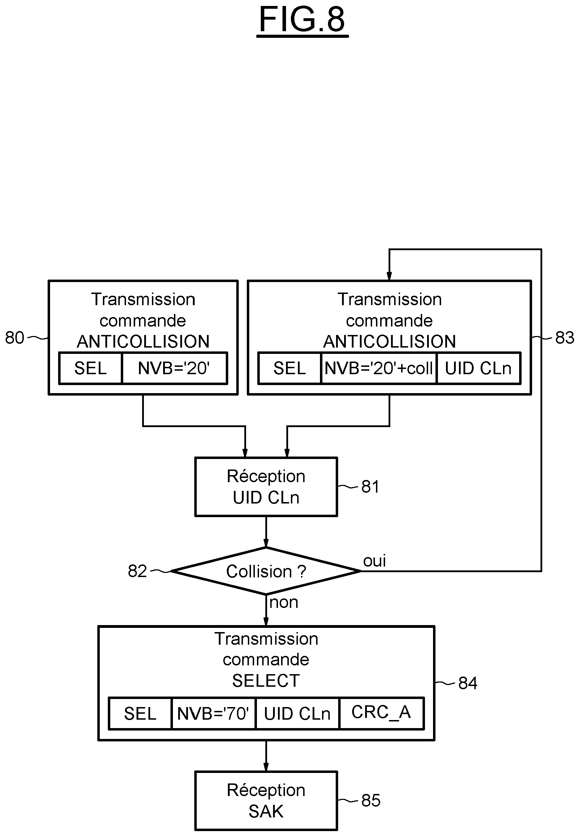

On se réfère maintenant plus particulièrement à la figure 8 pour illustrer plus en détail la mise en oeuvre de la boucle d'anticollision.

Dans une étape 80, l'équipement EQP transmet un signal de commande d'anticollision désigné par ANTICOLLISION dans la norme ISO/IEC 14443. Cette commande anticollision comprend un champ SEL désignant notamment le niveau de cascade ainsi qu'un champ NVB qui est ici affecté de la valeur « 20 ». Cette valeur force dans la norme ISO/IEC 14443 toutes les cartes de proximité à répondre avec leur partie d'identifiant UID CLn correspondant au niveau de cascade désigné par le champ SEL.

Dans le présent mode de mise en oeuvre de l'invention, à la réception d'une telle commande anticollision, un identifiant UID CLn, élaboré à partir des différents identifiants UID CLn des différents modules applicatifs, va être élaboré puis transmis par l'objet et reçu par l'équipement (étape 81).

A cet égard, puisque les identifiants des différents modules applicatifs sont différents, l'identifiant UID CLn résultant qui est transmis depuis l'objet vers l'équipement EQP est élaboré d'une façon analogue à celle qui a été décrite en référence à la figure 6 pour le signal de réponse ATQA. Et, puisque par définition, les identifiants des différents modules applicatifs sont différents, il va forcément exister, dans l'identifiant UID CLn transmis vers l'équipement, au moins une information de collision Inf-coll.

En conséquence, à l'étape 82, une collision est détectée par l'équipement EQP.

L'équipement EQP reconnaît la position « coll » de la première collision.

L'équipement EQP transmet alors dans l'étape 83 une nouvelle commande anticollision dans laquelle le champ NVB a une valeur qui spécifie le nombre de bits valides de l'identifiant UID CLn reçu. Les bits valides sont les bits qui ont été reçus avant la réception de l'information de collision Inf-coll.

Ces bits valides sont alors suivis d'un bit ayant une valeur logique prédéterminée décidée par l'équipement, par exemple la valeur « 1 ».

La commande anticollision transmise à l'étape 83 comporte alors le champ SEL, le champ NVB, suivis des bits valides de l'identifiant UID CLn.

Seuls les modules applicatifs de l'objet dont une portion de UID CLn est égale aux bits valides transmis par l'équipement EQP doivent transmettre leurs bits restants de l'identifiant UID CLn.

Et, si plusieurs modules applicatifs sont concernés, alors, il y a de nouveau un nouvel UID CLn résultant qui est élaboré au sein des moyens de déclenchement de l'objet, de la même façon que celui qui a été décrit en référence à la figure 6.

Ceci va provoquer une nouvelle collision qui sera détectée à l'étape 82 et produira à nouveau la transmission d'une commande anticollision, tenant compte de la nouvelle position de collision.

Lorsque plus aucune collision n'est détectée à l'étape 82, l'équipement EQP transmet alors une commande de sélection dénommée « SELECT » dans laquelle le champ NVB prend la valeur « 70 », ce qui signifie que l'équipement EQP transmet au sein de cette commande « SELECT », la totalité de la partie d'identifiant UID CLn sélectionnée.

Cette commande « SELECT » comporte par ailleurs de façon classique un champ de code de correction CRC_A.

Le module applicatif dont la portion d'identifiant correspond à la portion d'identifiant contenue dans la commande « SELECT », répond par le signal SAK.

Et, on revient alors à l'étape 45 de la figure 4.

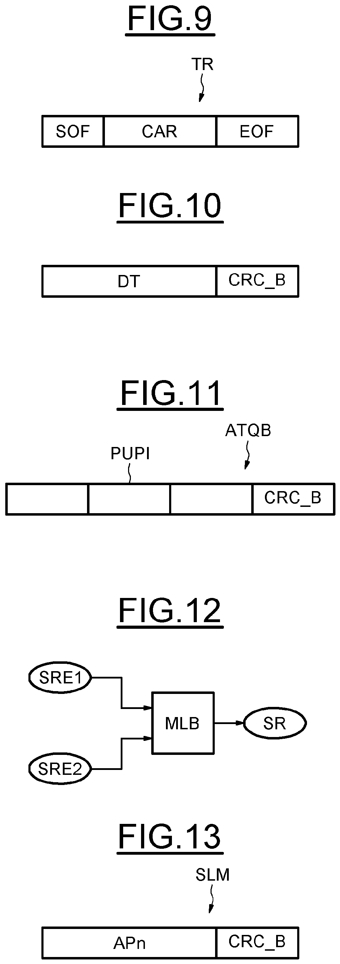

On se réfère maintenant plus particulièrement aux figures 9 à 14, pour décrire une mise en oeuvre de l'invention applicable dans le cas d'un dialogue selon le protocole de type B défini dans la norme ISO/IEC 14443.

Tout comme pour le type A, la transmission de données depuis l'objet vers l'équipement s'effectue par modulation à l'aide d'une sous-porteuse. Pour plus de détails, l'homme du métier pourra se référer au document ISO/CEI 14443-2 :2010 mentionné ci avant.

Dans le protocole de type B, la transmission des octets de données est effectuée sous forme de caractères CAR, eux-mêmes transmis sous forme de trames TR (figure 9).

La trame TR est normalement délimitée par un début de trame SOF et par une fin de trame EOF.

Le format d'un caractère comporte un bit de départ ayant la valeur logique « 0 » suivi d'un octet de données et d'un bit d'arrêt ayant la valeur logique « 1 ».

Par ailleurs, les trames comportent également un champ CRC_B contenant un code de détection d'erreur de vérification de redondance cyclique (figure 10). Le champ CRC_B est calculé de façon classique à partir des bits de données DT à l'exclusion des bits de début, des bits d'arrêt, des retards en octets, des débuts de trame et fins de trame et des bits du champ CRC_B lui-même.

Tout comme le protocole type A, il est prévu dans le protocole type B en réponse à un signal de commande de demande REQB, ou un signal de commande de réveil WUPB, la transmission par l'objet d'un signal de réponse ATQB tel qu'illustré schématiquement sur la figure 11.

Plus précisément, le signal ATQB comporte notamment un champ comportant dans la norme ISO 14443 l'identifiant de l'objet, dénommé PUPI. Dans cet aspect de la présente invention, ce champ d'un signal ATQB contiendra l'identifiant PUPI d'un module applicatif de l'objet.

Le champ ATQB comporte par ailleurs un champ CRC_B.

Ici l'identifiant PUPI d'un module applicatif forme l'information d'identification ID du module.

Selon un mode de mise en oeuvre du procédé selon l'invention, la transmission de ladite information de collision comprend alors une élaboration d'une trame invalide et la transmission de ladite trame invalide.

Une trame invalide peut être par exemple une trame comportant un mauvais CRC_B. Cela étant, ceci n'est qu'un exemple. D'autres possibilités sont offertes comme par exemple l'élaboration d'une trame ne comportant pas de champ de début de trame ou bien ne comportant pas de champ de fin de trame, ou encore dans laquelle certains au moins des bits de début et/ou d'arrêt sont manquants.

Comme illustré sur la figure 12, les moyens d'élaboration MLB, qui peuvent être par exemple des moyens logiciels, vont élaborer le signal de réponse contenant ladite information de collision (trame invalide) à partir de signaux de réponse élémentaires SRE1 et SRE2.

La procédure d'anticollision décrite dans la norme ISO/IEC 14443 prévoit en particulier un dialogue entre le lecteur et les différentes cartes de proximité au sein de tranches temporelles.

Il est alors prévu que les identifiants respectifs des modules applicatifs soient respectivement associés à des numéros de tranches temporelles différents et, lors de la procédure d'anticollision, chaque identifiant est transmis dans la tranche temporelle dont le numéro de tranche est associé audit identifiant.

A cet égard, on peut utiliser la commande de marqueur de tranche (« slot marker », en langue anglaise) référencé SLM sur la figure 13. Plus précisément, la commande SLM comporte un champ CRC_B ainsi qu'un champ APn comportant le numéro de tranche temporelle.

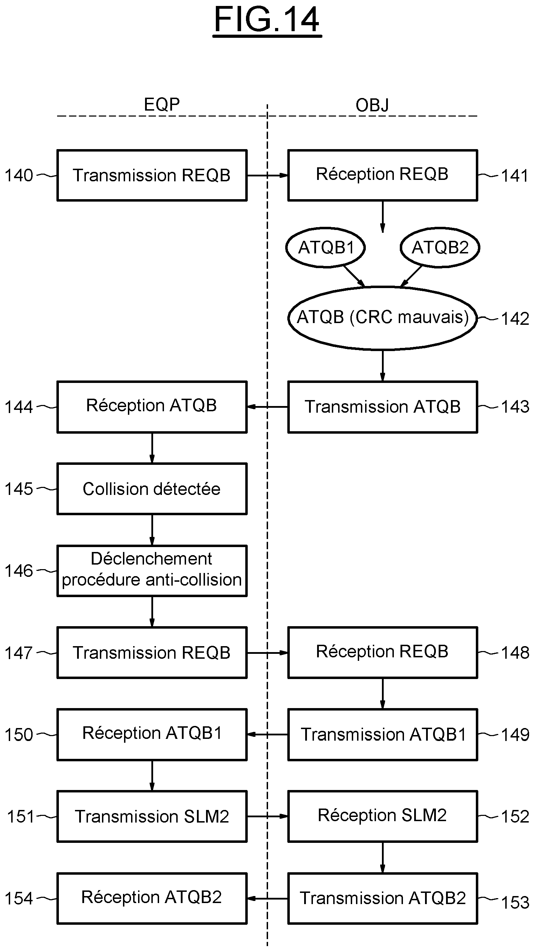

On se réfère maintenant plus précisément à la figure 14 pour illustrer un exemple de procédure anticollision permettant l'identification des différents identifiants des modules applicatifs de l'objet.

Dans l'étape 140, l'équipement transmet un signal de commande de demande REQB.

On suppose ici que l'objet OBJ comporte deux modules applicatifs.

A la réception du signal REQB par l'objet (étape141) un signal de réponse ATQB comportant un mauvais CRC est élaboré dans l'étape 142 à partir des signaux de réponse ATQB1 et ATQB2 respectivement associés aux deux modules applicatifs.

Le signal ATQB est ensuite transmis (étape 143) vers l'équipement EQP qui le reçoit dans l'étape 144.

La trame reçue étant invalide, une collision est détectée (étape 145), ce qui déclenche la procédure d'anticollision (étape 146) prévue dans le protocole type B de la norme ISO/IEC 14443.

L'équipement EQP transmet alors de nouveau un signal REQB comportant cette fois-ci dans le champ « paramètre », une valeur correspondant à un nombre de tranches égal par exemple à six.

On suppose ici que l'identifiant ID1 (PUPI) du module applicatif MA1 est associé à la première tranche temporelle, tandis que l'identifiant ID2 (PUPI) du deuxième module applicatif de l'objet est associé à la tranche temporelle n°2.

A la réception de la commande REQB (étape 148) correspondant à la tranche n°1, seul est transmis le signal ATQB1 relatif au module MA1 et contenant l'identifiant ID1 de ce module dans le signal ATQB1.

Après réception de ce signal ATQB1 (étape 150), le signal SLM2 désignant la tranche n°2 est transmis (étape 151).

A la réception de ce marqueur de tranche SLM2 (étape 152), l'objet transmet le signal ATQB2 (étape 153) contenant, dans le champ correspondant, l'identifiant ID2 du deuxième module applicatif.

Ce signal est reçu dans l'étape 154 par l'équipement EQP. L'équipement transmet alors ensuite successivement les marqueurs de tranche des tranches 3 à 6. Mais, comme aucune réponse n'est reçue, l'équipement EQP en déduit la présence de deux identifiants affectés à deux modules applicatifs différents.

A ce stade, les différents modules applicatifs sont dans leur état ACTIF et, d'une façon analogue à ce qui a été décrit en référence au protocole type A, le lecteur peut alors envoyer des commandes spécifiques associées à son application.

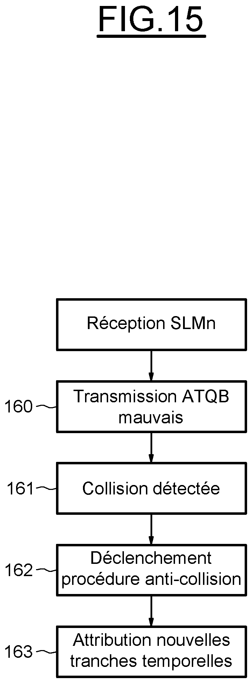

Lorsque le nombre de tranches temporelles est inférieur au nombre de modules applicatifs, une procédure d'anti-collision va être déclenchée en réponse à la commande de marqueur de tranche (SLM) désignant la dernière tranche. Plus précisément en réponse à cette dernière commande de marqueur de tranche SLMn (figure 15), l'objet transmet un mauvais ATQB (trame invalide) (étape 160). Une collision va donc être détectée (étape 161) au niveau de l'équipement, ce qui va déclencher une nouvelle procédure d'anti-collision (étape 162) avec l'attribution de nouvelles tranches temporelles (étape 163).

## Revendications

1. Procédé de gestion du dialogue entre un équipement et au moins un objet capables de dialoguer selon un protocole de communication sans contact contenant une procédure d'anticollision, ledit objet contenant plusieurs modules applicatifs (MA1, ...MAj), le procédé comprenant une détection desdits modules applicatifs par au moins un déclenchement (21) de ladite procédure d'anticollision entre ledit au moins un objet (OBJ) et ledit équipement (EQP), ladite détection des modules applicatifs comprenant en réponse à au moins un signal de commande (SC) émis (30) par l'équipement, une transmission (32) par ledit objet (OBJ) d'au moins un signal de réponse (SR) contenant une information représentative d'une collision (Inf-coll), et un déclenchement (34) de la procédure d'anticollision en réponse audit signal de réponse.

2. Procédé selon la revendication 1, dans lequel les modules applicatifs sont respectivement associés à plusieurs informations d'identification différentes (ID1, ...IDj), et la détection des modules applicatifs comprend un déclenchement de ladite procédure d'anticollision sur lesdites informations d'identification.

3. Procédé selon l'une des revendications précédentes, dans lequel ledit au moins un objet (OBJ) est capable de dialoguer avec ledit équipement (EQP) selon le protocole type A défini dans la norme ISO/IEC 14443.

4. Procédé selon la revendication 3, dans lequel la transmission d'un bit ayant une première valeur logique comprend une modulation d'une porteuse avec une sous-porteuse pendant une première moitié d'une durée prédéterminée à partir d'une première séquence de commande (SQ1) et la transmission d'un bit ayant une deuxième valeur logique comprend une modulation de la porteuse avec la sous-porteuse pendant la deuxième moitié de ladite durée prédéterminée à partir d'une deuxième séquence de commande (SQ2), et une transmission de ladite information représentative d'une collision comprend une modulation de ladite porteuse avec la sous-porteuse pendant toute ladite durée prédéterminée à partir d'une troisième séquence de commande (SQ3).

5. Procédé selon la revendication 4, dans lequel l'élaboration dudit au moins un signal de réponse (SR) comprend à partir de plusieurs signaux de réponse élémentaires (SRE1, SRE2) respectivement associés aux modules applicatifs, au moins deux bits de même rang dans les différents signaux de réponse élémentaires ayant des valeurs logiques différentes, une comparaison (CMP) des bits de même rang dans les différents signaux de réponse élémentaires, et en cas de concordance entre tous les bits de même rang, une élaboration pour le rang considéré de la première séquence de commande ou de la deuxième séquence de commande, et en cas de discordance entre au moins deux bits de même rang, une élaboration pour le rang considéré de ladite troisième séquence de commande, et une modulation de la porteuse avec la sous porteuse à partir desdites séquences de commande élaborées (SQ1, SQ2, SQ3).

6. Procédé selon la revendication 5, dans lequel ledit au moins un signal de commande (SC) appartient au groupe formé par un signal de commande de demande désigné par REQA dans la norme ISO/IEC 14443, un signal de commande de réveil désigné par WUPA dans la norme ISO/IEC 14443, un signal de commande d'anticollision désigné par ANTICOLLISION dans la norme ISO/IEC 14443 et les signaux de réponse élémentaires correspondant à ces signaux de commande appartiennent au groupe formé par un signal de réponse à demande désigné par ATQA dans la norme ISO/IEC 14443 et un signal de réponse contenant au moins une partie de l'identifiant d'un module applicatif désigné par UID CLn dans la norme ISO/IEC 14443.

7. Procédé selon la revendication 1 ou 2, dans lequel ledit au moins un objet (OBJ) est capable de dialoguer avec ledit équipement (EQP) selon le protocole type B défini dans la norme ISO/IEC 14443.

8. Procédé selon la revendication 7, dans lequel la transmission des octets de données est effectuée sous forme de caractères (CAR) eux-mêmes transmis sous forme de trames (TR), et la transmission de ladite information de collision comprend une élaboration d'une trame invalide et la transmission de ladite trame invalide.

9. Procédé selon la revendication 7 ou 8, dans lequel les informations d'identification respectives (IDj) des modules applicatifs comprennent des identifiants (PUPI) respectivement associés à des numéros de tranches temporelles différents, et lors de la procédure d'anticollision chaque identifiant est transmis dans la tranche temporelle dont le numéro de tranche est associé audit identifiant.

10. Procédé selon la revendication 9, dans lequel ledit au moins un signal de commande (SC) appartient au groupe formé par un signal de commande de demande désigné par REQB dans la norme ISO/IEC 14443, un signal de commande de réveil désigné par WUPB dans la norme ISO/IEC 14443, une commande de marqueur de tranche désigné par « Slot-MARKER » dans la norme ISO/IEC 14443, et les signaux de réponse élémentaires correspondant à ces signaux de commande comprennent un signal de réponse à demande désigné par ATQB dans la norme ISO/IEC 14443.

11. Objet comprenant des moyens de traitement configurés pour dialoguer avec un équipement selon un protocole de communication sans contact contenant une procédure d'anticollision, **caractérisé en ce que** les moyens de traitement (MT) comprennent plusieurs modules applicatifs (MA1, ...MAj), et des moyens de déclenchement (MDCL) configurés pour provoquer un déclenchement de ladite procédure d'anticollision entre ledit objet et ledit équipement, les moyens de déclenchement (MDCL) étant configurés pour, en réponse à au moins un signal de commande émis par l'équipement, transmettre au moins un signal de réponse contenant une information représentative d'une collision (Inf-coll).

12. Objet selon la revendication 11, dans lequel les modules applicatifs sont respectivement associés à plusieurs informations d'identification différentes (ID1, ...IDj), et les moyens de déclenchement sont configurés pour provoquer un déclenchement de ladite procédure d'anticollision sur lesdites informations d'identification.

13. Objet selon la revendication 11 ou 12, dans lequel les moyens de traitement sont configurés pour dialoguer avec ledit équipement selon le protocole type A défini dans la norme ISO/IEC 14443.

14. Objet selon la revendication 13, dans lequel les moyens de traitement (MT) comprennent des moyens de modulation configurés pour moduler une sous-porteuse à partir d'une séquence de commande, des premiers moyens d'activation configurés pour élaborer une première séquence de commande (SQ1) et activer les moyens de modulation pour moduler la porteuse pendant une première moitié d'une durée prédéterminée de façon à transmettre un bit ayant une première valeur logique, des deuxièmes moyens d'activation configurés pour élaborer une deuxième séquence de commande (SQ2) et activer les moyens de modulation pour moduler la porteuse pendant une deuxième moitié de ladite durée prédéterminée de façon à transmettre un bit ayant une deuxième valeur logique, et les moyens de déclenchement comprennent des troisièmes moyens d'activation configurés pour élaborer une troisième séquence de commande (SQ3) et activer les moyens de modulation pour moduler la porteuse pendant toute ladite durée prédéterminée de façon à transmettre ladite information représentative d'une collision.

15. Objet selon la revendication 14, dans lequel les moyens de déclenchement comprennent des moyens de détermination configurés pour déterminer ledit au moins un signal de réponse à partir de plusieurs signaux de réponse élémentaires respectivement associés aux modules applicatifs, au moins deux bits de même rang dans les différents signaux de réponse élémentaires ayant des valeurs logiques différentes, les moyens de détermination comprenant des moyens de comparaison (CMP, LG) configurés pour effectuer une comparaison des bits de même rang dans les différents signaux de réponse élémentaires, et les moyens de détermination sont configurés pour, en cas de concordance entre tous les bits de même rang, élaborer pour le rang considéré la première séquence de commande (SQ1) ou de la deuxième séquence de commande (SQ2), et en cas de discordance entre au moins deux bits de même rang, élaborer pour le rang considéré ladite troisième séquence de commande (SQ3), et les moyens de modulation sont configurés pour moduler la porteuse avec la sous porteuse à partir desdites séquences de commande élaborées.

16. Objet selon la revendication 15, dans lequel ledit au moins un signal de commande (SC) appartient au groupe formé par un signal de commande de demande désigné par REQA dans la norme ISO/IEC 14443, un signal de commande de réveil désigné par WUPA dans la norme ISO/IEC 14443, un signal de commande d'anticollision désigné par ANTICOLLISION dans la norme ISO/IEC 14443 et les signaux de réponse élémentaires correspondant à ces signaux de commande appartiennent au groupe formé par un signal de réponse à demande désigné par ATQA dans la norme ISO/IEC 14443 et un signal de réponse contenant au moins une partie de l'identifiant d'un module applicatif désigné par UID CLn dans la norme ISO/IEC 14443.

17. Objet selon la revendication 11 ou 12, dans lequel les moyens de traitement (MT) sont configurés pour dialoguer avec ledit équipement selon le protocole type B défini dans la norme ISO/IEC 14443.

18. Objet selon la revendication 17, dans lequel les moyens de traitement (MT) comprennent des moyens de transmission configurés pour transmettre des octets de données sous forme de caractères eux-mêmes transmis sous forme de trames, et les moyens de déclenchement comprennent des moyens d'élaboration (MLB) configurés pour élaborer une trame invalide et la délivrer aux moyens de transmission.

19. Objet selon la revendication 17 ou 18, dans lequel les informations d'identification respectives (ID1, ...IDj) des modules applicatifs comprennent des identifiants (PUPI) respectivement associés à des numéros de tranches temporelles différents, et lors de la procédure d'anticollision les moyens de traitement sont configurés pour transmettre chaque identifiant dans la tranche temporelle dont le numéro de tranche est associé audit identifiant.

20. Objet selon la revendication 19, dans lequel ledit au moins un signal de commande (SC) appartient au groupe formé par un signal de commande de demande désigné par REQB dans la norme ISO/IEC 14443, un signal de commande de réveil désigné par WUPB dans la norme ISO/IEC 14443, une commande de marqueur de tranche désigné par « Slot-MARKER » dans la norme ISO/IEC 14443, et les signaux de réponse élémentaires correspondant à ces signaux de commande comprennent un signal de réponse à demande désigné par ATQB dans la norme ISO/IEC 14443.

## Patentansprüche

1. Verfahren zur Verwaltung des Dialogs zwischen einem Gerät und mindestens einem Objekt, die geeignet sind, gemäß einem kontaktlosen Kommunikationsprotokoll, das ein Antikollisionsverfahren enthält, zu dialogieren, wobei das Objekt mehrere Anwendungsmodule (MA1, ... MAj) enthält, wobei das Verfahren ein Erfassen der Anwendungsmodule durch mindestens ein Auslösen (21) des Antikollisionsverfahrens zwischen dem mindestens einen Objekt (OBJ) und dem Gerät (EQP) aufweist, wobei das Erfassen der Anwendungsmodule als Antwort auf mindestens ein Steuersignal (SC), das von dem Gerät gesendet (30) wird, ein Übertragen (32) durch das Objekt (OBJ) von mindestens einem Antwortsignal (SR), das eine Information enthält, die für eine Kollision (Inf-coll) repräsentativ ist, und ein Auslösen (34) des Antikollisionsverfahrens als Antwort auf das Antwortsignal aufweist.

2. Verfahren nach Anspruch 1, wobei die Anwendungsmodule jeweils mit mehreren verschiedenen Identifizierungsinformationen (ID1, ... IDj) verbunden sind und das Erfassen der Anwendungsmodule ein Auslösen des Antikollisionsverfahrens auf den Identifizierungsinformationen aufweisen.

3. Verfahren nach einem der vorhergehenden Ansprüche, wobei das mindestens eine Objekt (OBJ) geeignet ist, mit dem Gerät (EQP) gemäß dem Protokoll Typ A, das in der Norm ISO/IEC 14443 definiert ist, zu dialogieren.

4. Verfahren nach Anspruch 3, wobei das Übertragen eines Bits mit einem ersten logischen Wert eine Modulation eines Trägers mit einem Unterträger während einer ersten Hälfte einer vorbestimmten Dauer ausgehend von einer ersten Steuersequenz (SQ1) aufweist und das Übertragen eines Bits mit einem zweiten logischen Wert eine Modulation des Trägers mit dem Unterträger während der zweiten Hälfte der vorbestimmten Dauer ausgehend von einer zweiten Steuersequenz (SQ2) aufweist und ein Übertragen von der Information, die für eine Kollision repräsentativ ist, eine Modulation des Trägers mit dem Unterträger während der gesamten vorbestimmten Dauer ausgehend von einer dritten Steuersequenz (SQ3) aufweist.

5. Verfahren nach Anspruch 4, wobei das Erstellen des mindestens einen Antwortsignals (SR) ausgehend von mehreren elementaren Antwortsignalen (SRE1, SRE2), die jeweils den Anwendungsmodulen zugeordnet werden, mindestens zwei Bits des gleichen Rangs in den verschiedenen elementaren Antwortsignalen mit unterschiedlichen logischen Werten aufweist, ein Vergleichen (CMP) der Bits des gleichen Rangs in den verschiedenen elementaren Antwortsignalen und im Falle einer Übereinstimmung zwischen allen Bits des gleichen Rangs ein Erstellen für den betreffenden Rang der erste Steuersequenz oder der zweiten Steuersequenz und im Falle der Nichtübereinstimmung zwischen mindestens zwei Bits des gleichen Rangs ein Erstellen für den betreffenden Rang der dritten Steuersequenz und eine Modulation des Trägers mit dem Unterträger ausgehend von den erstellten Steuersequenzen (SQ1, SQ2, SQ3) aufweist.

6. Verfahren nach Anspruch 5, wobei das mindestens eine Steuersignal (SC) zu der Gruppe gehört, die gebildet ist aus einem Anforderungssteuersignal, das gemäß der Norm ISO/IEC 14443 mit REQA bezeichnet ist, einem Aufwachsteuersignal, das gemäß der Norm ISO/IEC 14443 mit WUPA bezeichnet ist, einem Antikollisions-Steuersignal, das gemäß der Norm ISO/IEC 14443 mit ANTICOLLISION bezeichnet ist, und die elementaren Antwortsignale, die diesen Steuersignalen entsprechen, zu der Gruppe gehören, die gebildet ist aus einem Antwortsignal, das gemäß der Norm ISO/IEC 14443 mit ATQA bezeichnet ist, und einem Antwortsignal, das mindestens einen Teil der Kennung eines Anwendungsmoduls enthält, das gemäß der Norm ISO/IEC 14443 mit UID CLn bezeichnet ist.

7. Verfahren nach Anspruch 1 oder 2, wobei das mindestens eine Objekt (OBJ) geeignet ist, mit dem Gerät (EQP) gemäß dem Protokoll Typ B, das in der Norm ISO/IEC 14443 definiert ist, zu dialogieren.

8. Verfahren nach Anspruch 7, wobei das Übertragen der Datenbytes in Form von Zeichen (CAR) durchgeführt wird, die selbst in Form von Frames (TR) übertragen werden, und das Übertragen der Kollisionsinformation ein Erstellen eines ungültigen Frames und das Übertragen des ungültigen Frames aufweist.

9. Verfahren nach Anspruch 7 oder 8, wobei die jeweiligen Identifizierungsinformationen (IDj) der Anwendungsmodule Kennungen (PUPI) aufweisen, die jeweils verschiedenen Zeitschlitznummern zugeordnet werden, und während des Antikollisionsverfahrens jede Kennung in dem Zeitschlitz übertragen wird, dessen Schlitznummer der Kennung zugeordnet wird.

10. Verfahren nach Anspruch 9, wobei das mindestens eine Steuersignal (SC) zu der Gruppe gehört, die gebildet ist aus einem Anforderungssteuersignal, das gemäß der Norm ISO/IEC 14443 mit REQB bezeichnet ist, einem Aufwachsteuersignal, das gemäß der Norm ISO/IEC 14443 mit WUPB bezeichnet ist, einem Markierbefehl des Zeitschlitzes, der gemäß der Norm ISO/IEC 14443 mit "Slot-MARKER" bezeichnet ist, und die elementaren Antwortsignale, die diesen Steuersignalen entsprechen, ein Antwortsignal aufweisen, das gemäß der Norm ISO/IEC 14443 mit ATQB bezeichnet ist.

11. Objekt, umfassend Verarbeitungsmittel, die konfiguriert sind, um mit einem Gerät gemäß einem kontaktlosen Kommunikationsprotokoll, das ein Antikollisionsverfahren enthält, zu dialogieren, **dadurch gekennzeichnet, dass** die Verarbeitungsmittel (MT) mehrere Anwendungsmodule (MA1, ... MAj) und Auslösemittel (MDCL) aufweisen, die konfiguriert sind, um ein Auslösen des Antikollisionsverfahrens zwischen dem Objekt und dem Gerät zu bewirken, wobei die Auslösemittel (MDCL) konfiguriert sind, um als Antwort auf mindestens ein Steuersignal, das von dem Gerät gesendet wird, mindestens ein Antwortsignal, das eine Information enthält, die für eine Kollision (Inf-coll) repräsentativ ist, zu übertragen.

12. Objekt nach Anspruch 11, wobei die Anwendungsmodule jeweils mit mehreren verschiedenen Identifizierungsinformationen (ID1, ... IDj) verbunden sind und die Auslösemittel konfiguriert sind, um ein Auslösen des Antikollisionsverfahrens auf den Identifizierungsinformationen zu bewirken.

13. Objekt nach Anspruch 11 oder 12, wobei die Verarbeitungsmittel konfiguriert sind, um mit dem Gerät gemäß dem Protokoll Typ A, das in der Norm ISO/IEC 14443 definiert ist, zu dialogieren.

14. Objekt nach Anspruch 13, wobei die Verarbeitungsmittel (MT) Modulierungsmittel, die konfiguriert sind, um einen Unterträger ausgehend von einer Steuersequenz zu modulieren, erste Aktivierungsmittel, die konfiguriert sind, um eine erste Steuersequenz (SQ1) zu erstellen und die Modulierungsmittel zu aktivieren, um den Träger während einer ersten Hälfte einer vorbestimmten Dauer derart zu modulieren, um ein Bit mit einem ersten logischen Wert zu übertragen, zweite Aktivierungsmittel aufweisen, die konfiguriert sind, um eine zweite Steuersequenz (SQ2) zu erstellen und die Modulierungsmittel zu aktivieren, um den Träger während einer zweiten Hälfte der vorbestimmten Dauer derart zu modulieren, um ein Bit mit einem zweiten logischen Wert zu übertragen, und die Auslösemittel dritte Aktivierungsmittel aufweisen, die konfiguriert sind, um eine dritte Steuerfrequenz (SQ3) zu erstellen und die Modulierungsmittel zu aktivieren, um den Träger während der gesamten vorbestimmten Dauer derart zu modulieren, um die Information zu übertragen, die für eine Kollision repräsentativ ist.

15. Objekt nach Anspruch 14, wobei die Auslösemittel Mittel zum Bestimmen aufweisen, die konfiguriert sind, um das mindestens eine Antwortsignal ausgehend von mehreren elementaren Antwortsignalen zu bestimmen, die jeweils den Anwendungsmodulen zugeordnet sind, wobei mindestens zwei Bits des gleichen Rangs in den verschiedenen elementaren Antwortsignalen unterschiedliche logische Werten aufweisen, wobei die Mittel zum Bestimmen Mittel zum Vergleichen (CMP, LG) aufweisen, die konfiguriert sind, um ein Vergleichen der Bits des gleichen Rangs in den verschiedenen elementaren Antwortsignalen durchzuführen, und die Mittel zum Bestimmen konfiguriert sind, um im Falle einer Übereinstimmung zwischen allen Bits des gleichen Rangs für den betreffenden Rang die erste Steuersequenz (SQl) oder die zweite Steuersequenz (SQ2) zu erstellen, und im Falle der Nichtübereinstimmung zwischen mindestens zwei Bits des gleichen Rangs für den betreffenden Rang die dritte Steuersequenz (SQ3) zu erstellen, und die Modulierungsmittel konfiguriert sind, um den Träger mit dem Unterträger ausgehend von den erstellten Steuersequenzen zu modulieren.

16. Objekt nach Anspruch 15, wobei das mindestens eine Steuersignal (SC) zu der Gruppe gehört, die gebildet ist aus einem Anforderungssteuersignal, das gemäß der Norm ISO/IEC 14443 mit REQA bezeichnet ist, einem Aufwachsteuersignal, das gemäß der Norm ISO/IEC 14443 mit WUPA bezeichnet ist, einem Antikollisions-Steuersignal, das gemäß der Norm ISO/IEC 14443 mit ANTICOLLISION bezeichnet ist, und die elementaren Antwortsignale, die diesen Steuersignalen entsprechen, zu der Gruppe gehören, die gebildet ist aus einem Antwortsignal, das gemäß der Norm ISO/IEC 14443 mit ATQA bezeichnet ist, und einem Antwortsignal, das mindestens einen Teil der Kennung eines Anwendungsmoduls enthält, das gemäß der Norm ISO/IEC 14443 mit UID CLn bezeichnet ist.

17. Objekt nach Anspruch 11 oder 12, wobei die Verarbeitungsmittel (MT) konfiguriert sind, um mit dem Gerät gemäß dem Protokoll Typ B, das in der Norm ISO/IEC 14443 definiert ist, zu dialogieren.

18. Objekt nach Anspruch 17, wobei die Verarbeitungsmittel (MT) Mittel zum Übertragen aufweisen, die konfiguriert sind, um Datenbytes in Form von Zeichen zu übertragen, die selbst in Form von Frames übertragen werden, und die Auslösemittel Mittel zum Erstellen (MLB) aufweisen, die konfiguriert sind, um einen ungültigen Frame zu erstellen und ihn an die Mittel zum Übertragen abzugeben.

19. Objekt nach Anspruch 17 oder 18, wobei die jeweiligen Identifizierungsinformationen (ID1, ... IDj) der Anwendungsmodule Kennungen (PUPI) aufweisen, die jeweils verschiedenen Zeitschlitznummern zugeordnet sind, und während des Antikollisionsverfahrens die Mittel zum Verarbeiten konfiguriert sind, um jede Kennung in dem Zeitschlitz zu übertragen wird, dessen Schlitznummer der Kennung zugeordnet ist.

20. Objekt nach Anspruch 19, wobei das mindestens eine Steuersignal (SC) zu der Gruppe gehört, die gebildet ist aus einem Anforderungssteuersignal, das gemäß der Norm ISO/IEC 14443 mit REQB bezeichnet ist, einem Aufwachsteuersignal, das gemäß der Norm ISO/IEC 14443 mit WUPB bezeichnet ist, einem Markierbefehl des Zeitschlitzes, der gemäß der Norm ISO/IEC 14443 mit "Slot-MARKER" bezeichnet ist, und die elementaren Antwortsignale, die diesen Steuersignalen entsprechen, ein Antwortsignal aufweisen, das gemäß der Norm ISO/IEC 14443 mit ATQB bezeichnet ist.

## Claims

1. Method for managing the dialogue between an equipment and at least one object, which are capable of communicating according to a contactless communication protocol containing an anticollision procedure, said object containing several application modules (MA1, ...MAj), the method comprising a detection of said application modules by at least one triggering (21) of the said anticollision procedure between said at least one object (OBJ) and said equipment (EQP), said detection of the application modules comprising, in response to at least one command signal (SC) sent (30) by the equipment, a transmission (32) by said objet (OBJ) of at least one response signal (SR) containing an information representative of a collision (Inf-coll), and a triggering (34) of the anticollision procedure in response to said response signal.

2. Method according to Claim 1, wherein the application modules are respectively associated with several different identification informations (ID1, ...IDj), and the detection of the application modules comprises a triggering of said anticollision procedure on said identification informations.

3. Method according to one of the preceding claims, wherein which said at least one object (OBJ) is capable of communicating with said equipment (EQP) according to the type A protocol defined in the ISO/IEC 14443 standard.

4. Method according to Claim 3, wherein the transmission of a bit having a first logical value comprises a modulation of a carrier with a sub-carrier for a first half of a predetermined period based on a first command sequence (SQ1) and the transmission of a bit having a second logical value comprises a modulation of the carrier with the sub-carrier for the second half of said predetermined period based on a second command sequence (SQ2), and a transmission of said information representative of a collision comprises a modulation of said carrier with the sub-carrier for the whole of said predetermined period based on a third command sequence (SQ3).

5. Method according to Claim 4, wherein the generation of said at least one response signal (SR) comprises, on the basis of several elementary response signals (SRE1, SRE2) respectively associated with the application modules, at least two bits of the same rank in the various elementary response signals having different logical values, a comparison (CMP) of the bits of the same rank in the various elementary response signals, and, in the event of matching between all the bits of the same rank, a generation for the rank in question of the first command sequence or of the second command sequence, and in the event of mismatching between at least two bits of the same rank, a generation for the rank in question of said third command sequence, and a modulation of the carrier with the sub-carrier based on said generated command sequences (SQ1, SQ2, SQ3).

6. Method according to Claim 5, wherein said at least one command signal (SC) belongs to the group formed by a request command signal designated by REQA in the ISO/IEC 14443 standard, a wake-up command signal designated by WUPA in the ISO/IEC 14443 standard, an anticollision command signal designated by ANTICOLLISION in the ISO/IEC 14443 standard and the elementary response signals corresponding to these command signals belong to the group formed by a response to request signal designated by ATQA in the ISO/IEC 14443 standard and a response signal containing at least one portion of the identifier of an application module designated by UID CLn in the ISO/IEC 14443 standard.

7. Method according to Claim 1 or 2, wherein said at least one object (OBJ) is capable of communicating with said equipment (EQP) according to the type B protocol defined in the ISO/IEC 14443 standard.

8. Method according to Claim 7, wherein the transmission of the data bytes is carried out in the form of characters (CAR) themselves transmitted in the form of frames (TR), and the transmission of said collision information comprises a generation of an invalid frame and the transmission of said invalid frame.

9. Method according to Claim 7 or 8, wherein the respective identification informations (IDj) of the application modules comprise identifiers (PUPI) respectively associated with different numbers of time slots, and during the anticollision procedure each identifier is transmitted in the time slot for which the slot number is associated with the said identifier.

10. Method according to Claim 9, wherein said at least one command signal (SC) belongs to the group formed by a request command signal designated by REQB in the ISO/IEC 14443 standard, a wake-up command signal designated by WUPB in the ISO/IEC 14443 standard, a slot marker command designated by "slot marker" in the ISO/IEC 14443 standard, and the elementary response signals corresponding to these command signals comprise a response to request signal designated by ATQB in the ISO/IEC 14443 standard.

11. Object comprising processing means configured to communicate with an equipment according to a contactless communication protocol containing an anticollision procedure, **characterized in that** the processing means (MT) comprise several application modules (MA1, ...MAj) , and triggering means (MDCL) configured to cause a triggering of said anticollision procedure between said object and said equipment, the triggering means (MDCL) being configured, in response to at least one command signal sent by the equipment, to transmit at least one response signal containing an information representative of a collision (Inf-coll).

12. Object according to Claim 11, wherein the application modules are respectively associated with several different identification informations (ID1, ...IDj), and the triggering means are configured to cause a triggering of the said anticollision procedure on said identification informations.

13. Object according to Claim 11 or 12, wherein the processing means are configured to communicate with said equipment according to the type A protocol defined in the ISO/IEC 14443 standard.

14. Object according to Claim 13, wherein the processing means (MT) comprise modulation means configured to modulate a sub-carrier based on a command sequence, first activation means configured to generate a first command sequence (SQ1) and activate the modulation means in order to modulate the carrier for a first half of a predetermined period so as to transmit a bit having a first logical value, second activation means configured to generate a second command sequence (SQ2) and activate the modulation means in order to modulate the carrier for a second half of said predetermined period so as to transmit a bit having a second logical value, and the triggering means comprise third activation means configured to generate a third command sequence (SQ3) and activate the modulation means in order to modulate the carrier for the whole of the said predetermined period so as to transmit the said information representative of a collision.

15. Object according to Claim 14, wherein the triggering means comprise determination means configured to determine said at least one response signal based on several elementary response signals respectively associated with the application modules, at least two bits of the same rank in the various elementary response signals having different logical values, the determination means comprising comparison means (CMP, LG) configured to make a comparison of the bits of the same rank in the various elementary response signals, and the determination means are configured, in the event of matching between all the bits of the same rank, to generate for the rank in question the first command sequence (SQ1) or the second command sequence (SQ2), and, in the event of mismatching between at least two bits of the same rank, generate for the rank in question the said third command sequence (SQ3), and the modulation means are configured to modulate the carrier with the sub-carrier based on the said generated command sequences.

16. Object according to Claim 15, wherein the said at least one command signal (SC) belongs to the group formed by a request command signal designated by REQA in the ISO/IEC 14443 standard, a wake-up command signal designated by WUPA in the ISO/IEC 14443 standard, an anticollision command signal designated by ANTICOLLISION in the ISO/IEC 14443 standard and the elementary response signals corresponding to these command signals belong to the group formed by a response to request signal designated by ATQA in the ISO/IEC 14443 standard and a response signal containing at least one portion of the identifier of an application module designated by UID CLn in the ISO/IEC 14443 standard.

17. Object according to Claim 11 or 12, wherein the processing means (MT) are configured to communicate with said equipment according to the type B protocol defined in the ISO/IEC 14443 standard.

18. Object according to Claim 17, wherein the processing means (MT) comprise transmission means configured to transmit data bytes in the form of characters themselves transmitted in the form of frames, and the triggering means comprise generation means (MLB) configured to generate an invalid frame and deliver it to the transmission means.

19. Object according to Claim 17 or 18, wherein the respective identification informations (ID1, ...IDj) of the application modules comprise identifiers (PUPI) respectively associated with different numbers of time slots, and during the anticollision procedure the processing means are configured to transmit each identifier in the time slot for which the slot number is associated with the said identifier.

20. Object according to Claim 19, wherein said at least one command signal (SC) belongs to the group formed by a request command signal designated by REQB in the ISO/IEC 14443 standard, a wake-up command signal designated by WUPB in the ISO/IEC 14443 standard, a slot marker command designated by "slot marker" in the ISO/IEC 14443 standard, and the elementary response signals corresponding to these command signals comprise a response to request signal designated by ATQB in the ISO/IEC 14443 standard.
